# FASCICULE DE BREVET EUROPEEN

(11) **EP 3 305 624 B1**
(45) Date de publication et mention de la délivrance du brevet: **15.05.2019**
(21) Numéro de dépôt: 17192216.4
(22) Date de dépôt: 20.09.2017
(51) Int. Cl.: B62D 1/16, F41H 7/04

(54) **CABINE DE VÉHICULE COMPORTANT UNE COLONNE DE DIRECTION**
FAHRZEUGKABINE, DIE EINE LENKSÄULE UMFASST
VEHICLE CAB COMPRISING A STEERING COLUMN

(30) Priorité: 10.10.2016 FR 1601467
(43) Date de publication de la demande: 11.04.2018
(73) Titulaire: NEXTER Systems, 42328 Roanne Cedex (FR)
(72) Inventeur: CIRIA, Samuel, 18023 BOURGES (FR); GERMENOT, Olivier, 18023 BOURGES (FR)
(74) Mandataire: Cabinet Chaillot

(56) Documents cités:
- EP-A1- 1 361 104
- EP-A2- 2 228 251
- EP-A2- 2 228 252
- FR-A1- 2 927 026

## Description

Le domaine technique de l'invention est celui des cabines de véhicules comportant un volant et une colonne de direction, et plus particulièrement des cabines de véhicules blindés.

En fonction de la forme générale d'un véhicule, il est souvent nécessaire de définir un système de direction comportant, outre le volant et la colonne de direction, un certain nombre de barres de liaison et de renvois d'angles permettant de transmettre le mouvement rotatif du volant à un boîtier de direction agissant sur les roues.

Le brevet FR2927026 montre ainsi une cabine de véhicule délimitant un poste de pilotage et dans laquelle le volant est solidaire d'une paroi supérieure de la cabine par un support de colonne. Le volant est relié à une colonne de direction qui est elle-même raccordée à un boîtier de direction qui se situe en arrière du siège du pilote.

Cette liaison est assurée par une barre de liaison qui est raccordée à la colonne de direction par un renvoi d'angle fixé au plancher.

Lorsque cette cabine de véhicule est soumise à un choc de mine au niveau du plancher (par exemple une mine à effet de souffle), la déformation du plancher qui en résulte risque de projeter le renvoi d'angle dans l'habitacle, ce qui est préjudiciable à la sécurité de l'équipage.

Une solution classique consiste à découpler le renvoi d'angle du plancher et à le disposer à distance de ce dernier. Il n'est cependant pas toujours possible d'éloigner suffisamment le renvoi d'angle du plancher pour éviter les projections.

C'est le but de l'invention que de proposer une architecture de cabine de véhicule permettant d'éviter de tels inconvénients. Ainsi la cabine de véhicule selon l'invention assure une protection renforcée contre les effets exercés par les mines sur le plancher en permettant d'éviter la projection d'un renvoi d'angle du système de direction.

Il devient alors possible de définir une cabine de véhicule particulièrement compacte et à hauteur réduite sans nuire à son niveau de protection.

Ainsi l'invention a pour objet une cabine de véhicule comportant un volant et une colonne de direction fixée à un carter qui est rendu solidaire d'une paroi supérieure de la cabine par un support de colonne, la colonne de direction étant reliée à un boîtier de direction par au moins une barre de liaison et au moins un renvoi d'angle disposé sensiblement à la verticale du support de colonne et à proximité d'un plancher de la cabine, cabine caractérisée en ce que le renvoi d'angle est coiffé par un caisson qui est fixé directement ou indirectement au support de colonne de direction par au moins un moyen d'absorption d'énergie.

Selon un mode de réalisation, le moyen d'absorption d'énergie pourra comporter une structure déformable comprenant au moins deux plaques verticales parallèles reliées par une plaque pliée transversale.

Le caisson pourra être fixé au support de colonne par l'intermédiaire du carter entourant la colonne de direction.

Selon un mode particulier de réalisation, le caisson pourra comporter une face supérieure qui portera un trou laissant passer un axe d'entrée du renvoi d'angle, face supérieure sur laquelle sera fixé le renvoi d'angle.

Le caisson pourra comporter au moins quatre faces entourant le renvoi d'angle de façon à assurer une protection contre la projection de pièces du renvoi d'angle.

Selon un autre mode de réalisation de l'invention, la colonne de direction pourra comporter un axe de liaison entre le volant et le renvoi d'angle, axe de liaison qui sera télescopique.

Selon un autre mode de réalisation dans lequel la cabine de véhicule comporte une nacelle mobile portant au moins un siège, nacelle se déplaçant par rapport au support de colonne, un dispositif souple pourra entourer au moins une partie de la colonne de direction et être fixé entre la nacelle et le carter.

L'invention sera mieux comprise à la lecture de la description qui va suivre d'un mode particulier de réalisation, description faite en référence aux dessins annexés et dans lesquels :
- La figure 1 est une vue latérale schématique d'une cabine de véhicule selon l'invention, cabine dans laquelle la nacelle mobile a été retirée ;
- La figure 2 est une vue latérale schématique d'une cabine de véhicule selon l'invention, cabine dans laquelle la nacelle mobile est mise en place ;
- La figure 3 est une vue de détail montrant en transparence un renvoi d'angle positionné dans son caisson ;
- La figure 4 est une vue en perspective et agrandie du caisson fixé au carter ;
- La figure 5 est une vue de face montrant le caisson et le carter de colonne de direction.

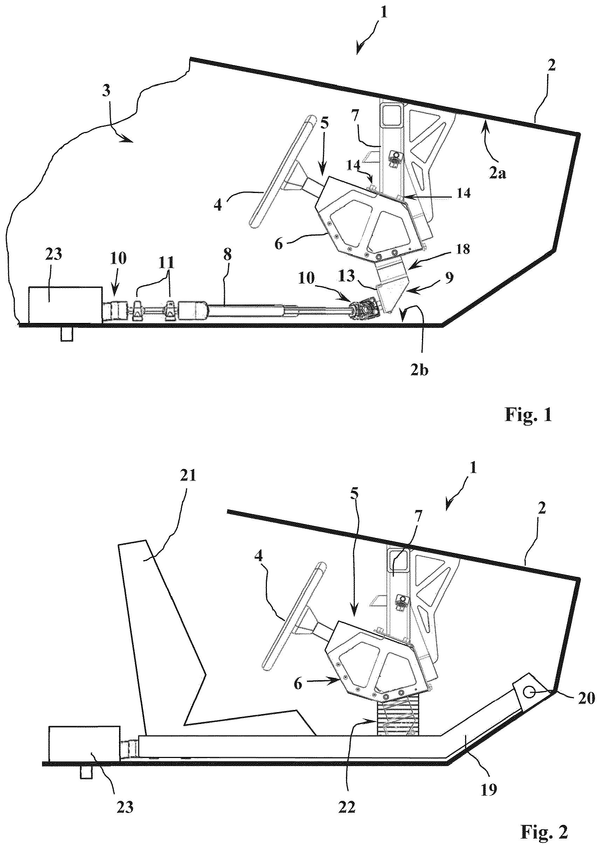

En se reportant à la figure 1, une cabine 1 de véhicule comporte une caisse 2 blindée qui délimite à sa partie avant un habitacle 3 dans lequel se positionne un pilote (non représenté) qui est assis sur un siège (non représenté).

La figure 2 montre cette même cabine avec une nacelle 19 portant le siège 21 du pilote.

La cabine 1 comporte un volant 4 et une colonne de direction 5 qui est fixée à un carter 6 qui est lui-même rendu solidaire d'une paroi supérieure 2a de la caisse 2 de la cabine 1 par un support de colonne 7. Les moyens de liaison du support 7 et de la caisse pourront être constitués par des vis ou par des soudures. Les moyens de liaison du carter 6 et du support 7 sont ici constitués par des vis 14.

La colonne de direction 5 est reliée à un boîtier de direction 23, qui est situé à distance de la colonne de direction 5 et en arrière de la nacelle du pilote comme on peut le voir à la figure 2. Cette liaison est assurée par au moins une barre de liaison 8 et un renvoi d'angle 9.

Des articulations 10, par exemple des joints de cardans, permettent de relier les différents éléments du système de direction entre eux.

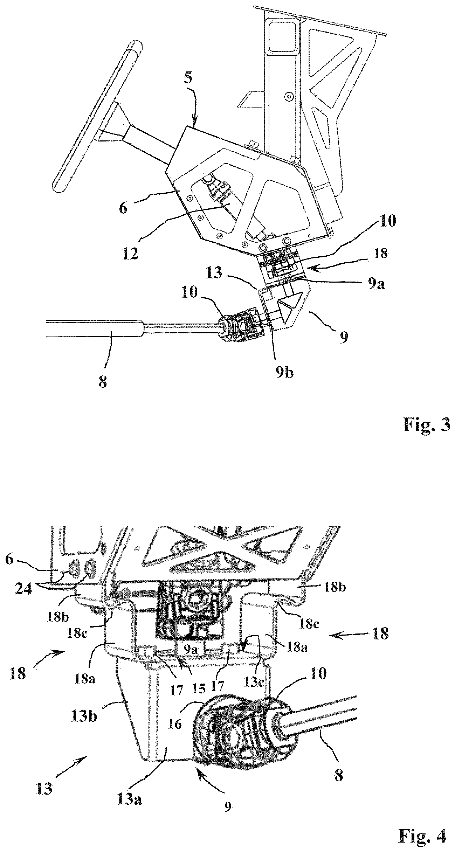

Comme on le voit à la figure 3, le renvoi d'angle 9 permet de transmettre la rotation de la colonne de direction 5, qui lui arrive par un axe d'entrée 9a, vers un axe de sortie 9b qui est orienté suivant une direction d'environ 90° par rapport à l'axe d'entrée 9a.

Les renvois d'angle sont des composants classiques dans le domaine automobile. On pourra par exemple consulter les brevets WO201207835, US4742725 et DE4306121 qui décrivent de tels dispositifs. Ils comprennent le plus souvent des pignons coniques.

Les joints de cardan 10 sont aussi des composants classiques qu'il n'est pas nécessaire de décrire en détails.

Comme on le voit à la figure 1, la barre de liaison 8 est sensiblement horizontale et disposée à proximité d'un plancher 2b de la caisse 2. Des colliers de liaison souples 11 permettent de lier la barre 8 au plancher 2b. Le renvoi d'angle 9 est lui aussi à proximité du plancher 2b et il est disposé sensiblement à la verticale du support 7 de colonne.

La colonne de direction 5 n'est pas représentée en détails. Elle comporte une cage externe qui permet sa fixation au carter 6. D'une façon classique la colonne de direction peut avoir une inclinaison modifiée par rapport au carter 6 pour adapter la colonne 5 à un utilisateur donné. Comme on le voit à la figure 3, la colonne 5 comporte un axe 12 (ou axe de liaison), axe qui est relié au volant 4 par un joint de cardan 10. L'axe de liaison 12 est télescopique pour permettre les réglages de la colonne 5.

L'axe 12 est relié au renvoi d'angle 9 à son autre extrémité par un autre joint de cardan 10.

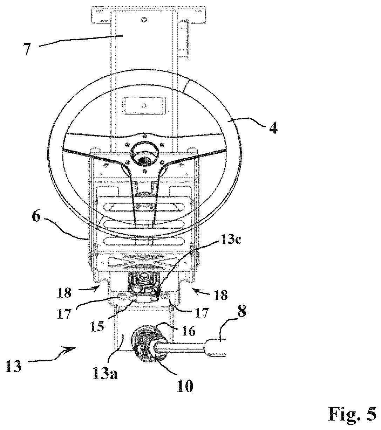

La figures 4 et 5 montrent la colonne 5 fixée dans son carter 6.

On remarque que le renvoi d'angle 9 est coiffé par un caisson 13 qui est fixé au support 7 de colonne de direction. Concrètement, pour ce mode de réalisation, le caisson 13 est fixé indirectement au support 7, par l'intermédiaire du carter 6 qui entoure la colonne de direction 5.

La figure 4 montre de façon plus précise la forme du caisson 13. Ce dernier est réalisé en tôle pliée. Il forme un boîtier entourant le renvoi d'angle 9 (voir aussi la figure 3). Le caisson 13 comporte une face avant 13a qui est prolongée par deux faces latérales 13b en forme de trapèzes rectangles.

Le caisson 13 comporte une face supérieure 13c perpendiculaire à la face avant 13a et qui porte un trou 15 (figure 5) laissant passer l'axe d'entrée 9a du renvoi d'angle 9. La face avant 13a comporte une lumière 16 qui entoure l'axe de sortie 9b du renvoi d'angle.

Le renvoi d'angle 9 est fixé à la face supérieure 13c par des vis 17 (voir les figures 4 et 5).

Comme on le voit sur les figures 4 et 5, la face supérieure 13c est prolongée latéralement par deux ailes 18. Chaque aile 18 est formée par deux plaques verticales 18a et 18b, parallèles l'une à l'autre, et reliées par une plaque pliée transversale 18c raccordée aux plaques verticales par deux ondulations.

Ces ailes 18 constituent un moyen d'absorption d'énergie qui est réalisé sous la forme d'une structure déformable. Les plaques 18b sont fixées au carter 6 par des vis 24 (figure 4) .

Lorsque la cabine 1 reçoit un choc au niveau de son plancher 2b, ce dernier se déforme et impacte le joint de cardan 10 et le renvoi d'angle 9. Le renvoi d'angle 9 est solidaire de la face supérieure 13c du caisson. L'effort reçu sera donc transmis à ce niveau et, le caisson 13 étant solidaire de la paroi supérieure 2a de la cabine (par l'intermédiaire du carter 6, lui-même fixé au support de colonne 7), l'effort sera communiqué à la paroi supérieure de la caisse 2 qui pourra l'équilibrer. On empêche ainsi tout choc du renvoi d'angle sur les membres inférieurs du pilote qui se trouve sur la nacelle et à proximité directe du renvoi d'angle.

Par ailleurs, les ailes 18 vont se déformer au niveau des ondulations liant la plaque pliée transversale 18c aux plaques verticales.

Une partie de l'énergie du choc est absorbée par cette déformation, ce qui diminue l'énergie cinétique reçue et limite les risques de projections de pièces mécaniques du renvoi d'angle 9 et du joint de cardan associé 10 ainsi que la projection de la colonne de direction.

A titre de variante on pourrait remplacer la structure déformable par un moyen de liaison du caisson 13 au carter 6 pouvant absorber de l'énergie. Par exemple au moins un plot cisaillable.

On remarque par ailleurs que la cage formée par le caisson 13 entoure presque complètement le renvoi d'angle 9 ce qui limite aussi le risque de projections de pièces mécaniques vers le pilote.

Avantageusement le caisson 13 selon l'invention est couplé à un axe 12 de la colonne de direction qui est télescopique. Ainsi le déplacement vertical du renvoi d'angle 9 comme suite au choc de mine ne provoquera pas de projection de l'axe de colonne de direction, ni de chocs sur les bras du pilote via le volant. On notera que les axes de colonnes de direction sont généralement télescopiques pour permettre les réglages de position du volant.

Comme on le voit sur la figure 2, la cabine 1 équipée comporte une nacelle mobile 19 qui porte au moins un siège 21 et qui peut pivoter sur des axes horizontaux 20 liés à la caisse 2.

La nacelle 19 peut donc se déplacer par rapport au support de colonne 7. Pour éviter tout risque de blessure lors des déplacements de la nacelle, un dispositif souple 22 (ici un soufflet en caoutchouc) entoure la partie basse de la colonne de direction 5 et il est fixé entre la nacelle 19 et le carter 6.

A titre de variante, le soufflet 22 pourra être remplacé par un dispositif souple formé par une pièce qui aura une raideur suffisante pour permettre d'amortir la chute de la nacelle comme suite à un choc consécutif à l'explosion d'une mine.

## Revendications

1. Cabine (1) de véhicule comportant un volant (4) et une colonne de direction (5) fixée à un carter (6) qui est rendu solidaire d'une paroi supérieure (2a) de la cabine par un support de colonne (7), la colonne de direction (5) étant reliée à un boîtier de direction (23) par au moins une barre de liaison (8) et au moins un renvoi d'angle (9) disposé sensiblement à la verticale du support de colonne (7) et à proximité d'un plancher (2b) de la cabine, cabine ***caractérisée en ce que*** le renvoi d'angle (9) est coiffé par un caisson (13) qui est fixé directement ou indirectement au support (7) de colonne de direction par au moins un moyen d'absorption d'énergie (18).

2. Cabine de véhicule selon la revendication 1, **caractérisée en ce que** le moyen d'absorption d'énergie (18) comporte une structure déformable comprenant au moins deux plaques verticales (18a,18b) parallèles reliées par une plaque pliée transversale (18c).

3. Cabine de véhicule selon une des revendications 1 ou 2, **caractérisée en ce que** le caisson (13) est fixé au support de colonne (7) par l'intermédiaire du carter (6) entourant la colonne de direction (5).

4. Cabine de véhicule selon une des revendications 1 à 3, **caractérisée en ce que** le caisson (13) comporte une face supérieure (13c) qui porte un trou (15) laissant passer un axe d'entrée (9a) du renvoi d'angle (9), face supérieure (13c) sur laquelle est fixé le renvoi d'angle (9).

5. Cabine de véhicule selon une des revendications 1 à 4, **caractérisée en ce que** le caisson (13) comporte au moins quatre faces (13a,13b,13c) entourant le renvoi d'angle (9) de façon à assurer une protection contre la projection de pièces du renvoi d'angle.

6. Cabine de véhicule selon une des revendications 1 à 5, **caractérisée en ce que** la colonne de direction (5) comporte un axe de liaison (12) entre le volant (4) et le renvoi d'angle (9), axe de liaison qui est télescopique.

7. Cabine de véhicule selon une des revendications 1 à 6, **caractérisée en ce qu'**elle comporte une nacelle (19) mobile portant au moins un siège (21), nacelle se déplaçant par rapport au support de colonne (7), un dispositif souple (22) entourant au moins une partie de la colonne de direction (5) et étant fixé entre la nacelle (19) et le carter (6).

## Patentansprüche

1. Fahrzeugkabine (1), aufweisend ein Lenkrad (4) und eine Lenksäule (5), die an einem Gehäuse (6) befestigt ist, das mit einer oberen Wand (2a) der Kabine mittels einer Säulenhalterung (7) fest verbunden ist, wobei die Lenksäule (5) mit einem Lenkgetriebe (23) mittels mindestens einer Verbindungsstange (8) und mindestens eines Winkeltriebs (9) verbunden ist, der etwa in der Vertikalen der Säulenhalterung (7) und in der Nähe eines Kabinenbodens (2b) angeordnet ist, wobei die Kabine **dadurch gekennzeichnet ist, dass** der Winkeltrieb (9) von einem Kasten (13) abgedeckt ist, der direkt oder indirekt mit der Lenksäulenhalterung (7) mittels mindestens eines Energieabsorptionsmittels (18) befestigt ist.

2. Fahrzeugkabine nach Anspruch 1, **dadurch gekennzeichnet, dass** das Energieabsorptionsmittel (18) eine verformbare Struktur aufweist, die mindestens zwei parallele vertikale Platten (18a, 18b) umfasst, die mittels einer gefalteten transversalen Platte (18c) verbunden sind.

3. Fahrzeugkabine nach einem der Ansprüche 1 oder 2, **dadurch gekennzeichnet, dass** der Kasten (13) an der Säulenhalterung (7) über das Gehäuse (6) verbunden ist, welches die Lenksäule (5) umgibt.

4. Fahrzeugkabine nach einem der Ansprüche 1 bis 3, **dadurch gekennzeichnet, dass** der Kasten (13) eine obere Fläche (13c) aufweist, die ein Loch (15) trägt, welches eine Eingangsachse (9a) des Winkeltriebs (9) hindurchlässt, wobei der Winkeltrieb (9) auf dieser oberen Fläche (13c) befestigt ist.

5. Fahrzeugkabine nach einem der Ansprüche 1 bis 4, **dadurch gekennzeichnet, dass** der Kasten (13) mindestens vier Flächen (13a, 13b, 13c) aufweist, die den Winkeltrieb (9) derart umgeben, dass ein Schutz gegen das Herumschleudern von Teilen des Winkeltriebs gesichert ist.

6. Fahrzeugkabine nach einem der Ansprüche 1 bis 5, **dadurch gekennzeichnet, dass** die Lenksäule (5) eine Verbindungsachse (12) zwischen dem Lenkrad (4) und dem Winkeltrieb (9) aufweist, wobei die Verbindungsachse teleskopisch ist.

7. Fahrzeugkabine nach einem der Ansprüche 1 bis 6, **dadurch gekennzeichnet, dass** sie eine bewegliche Gondel (19) aufweist, die mindestens einen Sitz (21) trägt, wobei sich die Gondel in Bezug auf die Säulenhalterung (7) verlagert, wobei eine elastische Vorrichtung (22) mindestens einen Teil der Lenksäule (5) umgibt und zwischen der Gondel (19) und dem Gehäuse (6) befestigt ist.

## Claims

1. A vehicle cab (1) including a steering wheel (4) and a steering column (5) fastened to a case (6) that is secured to an upper wall (2a) of the cab by a column support (7), the steering column (5) being connected to a steering gearbox (23) by at least one connecting bar (8) and at least one angle transmission (9) arranged substantially at the vertical of the column support (7) and near a floor (2b) of the cab, the cab being **characterized in that** the angle transmission (9) is capped by a shell (13) that is attached directly or indirectly to the steering column support (7) by at least one energy absorption means (18).

2. The vehicle cab according to claim 1, **characterized in that** the energy absorption means (18) includes a deformable structure comprising at least two parallel vertical plates (18a,18b) connected by a transverse bent plate (18c).

3. The vehicle cab according to one of claims 1 or 2, **characterized in that** the shell (13) is attached to the steering column (7) via the case (6) surrounding the steering column (5).

4. The vehicle cab according to one of claims 1 to 3, **characterized in that** the shell (13) includes an upper face (13c) that bears a hole (15) allowing an input axle (9a) of the angle transmission (9) to pass, on which upper face (13c) the angle transmission (9) is attached.

5. The vehicle cab according to one of claims 1 to 4, **characterized in that** the shell (13) includes at least four faces (13a,13b,13c) surrounding the angle transmission (9) so as to provide protection against the projection of parts from the angle transmission.

6. The vehicle cab according to one of claims 1 to 5, **characterized in that** the steering column (5) includes a hinge pin (12) between the steering wheel (4) and the angle transmission (9), the hinge pin being telescoping.

7. The vehicle cab according to one of claims 1 to 6, **characterized in that** it includes a movable nacelle (19) carrying at least one seat (21), the nacelle being movable relative to the column support (7), a flexible device (22) surrounding at least part of the steering column (5) and being fixed between the nacelle (19) and the case (6).
